# EUROPÄISCHE PATENTSCHRIFT

(11) **EP 1 072 503 B1**
(45) Veröffentlichungstag und Bekanntmachung des Hinweises auf die Patenterteilung: **09.07.2003**
(21) Anmeldenummer: 00115847.6
(22) Anmeldetag: 24.07.2000
(51) Int. Cl.: B62D 55/06

(54) **Lagereinrichtung für Raupenkettenfahrwerk**
Bearing for endless track unit
Roulement pour chenille sans fin

(30) Priorität: 29.07.1999 DE 19935705
(43) Veröffentlichungstag der Anmeldung: 31.01.2001
(73) Patentinhaber: Moll, Hermann, 71554 Weissach im Tal (DE)
(72) Erfinder: Moll, Hermann, 71554 Weissach im Tal (DE)
(74) Vertreter: Müller, Gottfried

(56) Entgegenhaltungen:
- DE-C- 382 318
- GB-A- 250 829
- JP-A- 59 040 982
- US-A- 2 581 365
- US-A- 3 107 924

## Beschreibung

Die Erfindung betrifft eine Schwerlasttransport- und Lagereinrichtung nach dem Oberbegriff des Anspruches 1.

Derartige Einrichtungen werden üblicherweise für den Transport schwerer Lasten auf einem im allgemeinen ebenen und befestigten Untergrund eingesetzt, vorzugsweise auf Hallen-, Industrie- oder sonstigen Betonböden. Es sind beispielsweise auf Rollen bzw. Räder verschiebbare Einrichtungen bekannt, welche zur Verminderung des Verschleißes an Rollen- und Bodenoberflächen und zur Vergrößerung der Aufstandsfläche mit Kautschukprodukten oder Elastomeren beschichtet sind oder mit einer aufgepumpten Bereifung versehen sind. Um einen ruhigen Lauf zu erreichen, muss ein verhältnismäßig großer Rollendurchmesser gewählt werden, wodurch die Anzahl der Aufstandsflächen limitiert wird. Außerdem ist bei längerem Stand eine Abplattung durch Kriechverformung des Beschichtungsstoffes zu befürchten, welche insbesondere für den Fall eintritt, dass die Einrichtung unter Last steht. Bei Rollen oder Rädern, welche mit Druckmedium gefüllt sind, ist außerdem ein gleichbleibendes Niveau bei unterschiedlichen Lastzuständen nicht bzw. nur durch entsprechend aufwendige Einrichtungen zu verwirklichen.

Um dennoch hohe Lasten transportieren zu können, müssen mehrere nebeneinander oder hintereinander angeordnete Rollen vorgesehen sein. Bei einer vorgegebenen Länge der Einrichtung ist dies jedoch nur mit einer begrenzten Anzahl von Rollen möglich.

Darüber hinaus sind raupen- bzw. kettenbetriebene Transporteinrichtung bekannt, beispielsweise bei Raupenschleppern oder Panzerfahrzeugen. Die Raupen bzw. Ketten werden in diskreten, mehr oder weniger engen Abständen durch Stützrollen getragen und weisen im Allgemeinen eine große Kettenunterteilung auf, welcher auf Grund des Polygoneffektes einen ruckfreien Lauf der Transporteinrichtung verhindert. Es ist auf ebenen, befestigten Böden mit diesen Einrichtungen kein gleichmäßiger Lasttransport möglich.

Darüber hinaus sind auf Schienen bewegbare Schwerlast-Verschiebeeinrichtungen bekannt. Die in den Boden eingelassenen Schienen dienen zur Verteilung und gleichmäßigen Einleitung der über die Räder bzw. Rollen der Einrichtung erzeugten, wandernden Linienlast in den Untergrund. Auf Grund der Bindung an die Schienen sind derartige Einrichtungen jedoch wenig flexibel und erfordern einen hohen Kosten- und Bauaufwand für die Verlegung der Schienen.

Schließlich sind Transporteinrichtungen bekannt, beispielsweise aus der Druckschrift DE 197 03 843 A1 und der Druckschrift US 3 446 301, welche eine Mehrzahl von gegenseitig in Transportrichtung mit Hilfe hydraulischer Stellelemente bewegbarer Transporteinheiten umfasst. Um eine Last zu transportieren, verbleibt zunächst eine Transporteinheit am Boden; die zweite Transporteinheit wird gegenüber der ersten Transporteinheit hydraulisch in Transporteinrichtung bewegt. Nach Abschluss der Bewegung nimmt die zweite Transporteinheit eine vorläufig stationäre Position ein; es wird nunmehr die erste Transporteinheit relativ zur zweiten Transporteinheit mit Hilfe der hydraulischen Stellelemente in Transportrichtung verschoben.

Derartige Einrichtungen zeichnen sich durch einen enorm hohen konstruktiven Aufwand aus. Zur Bewegung hoher Lasten muss außerdem ein erhebliches Maß an Energie bereit gestellt werden, um die diversen Transporteinheiten, auf den die zu bewegende Last ruht, hydraulisch verschieben zu können. Schließlich ist mit derartigen Transporteinrichtungen eine gleichmäßige, kontinuierliche und im Wesentlichen ruckfreie Bewegung der zu transportierenden Last weder in Horizontalrichtung noch in Vertikalrichtung zu gewährleisten.

Aus der Druckschrift GB 250 829 A ist eine Transporteinrichtung bekannt, welche einen Raupenantrieb umfasst, bei dem eine Raupen- bzw. Gliederkette um zwei Achsen gelegt ist und von einem Motor angetrieben wird. An einzelnen Elementen der Raupen- bzw. Gliederkette sind Trag- und Führungselemente befestigt, welche über Stützrollen auf einer Führungsschiene abrollen. Über die Bewegung der Gliederkette werden auch die Trag- und Führungselemente in Umfangsrichtung der Kette bewegt, wodurch die Fortbewegung der Transporteinrichtung realisiert wird.

Jedes Trag- und Führungselement weist zwei parallel zueinander angeordnete Stützrollen auf, die koaxiale Drehachsen besitzen und parallel zur Mittelebene des Trag- und Führungselementes bzw. der Führungsschiene angeordnet sind. Die Führungsschiene ist zweiteilig aufgebaut, wobei zwischen den beiden Teilen ein durchgehender Längsschlitz freigelassen ist, durch den das Trag- und Führungselement verschoben werden kann. Die Stützrollen des Trag- und Führungselementes laufen an Auskragungen der Teile der Führungsschiene um und werden von seitlich überragenden Wandabschnitten eingefasst.

Diese Ausführung hat den Nachteil, dass die Führungsschiene aus zwei separaten Einzelteilen aufgebaut werden muss, welche nicht unmittelbar miteinander verbunden sind, so dass unter den herrschenden hohen Lasten nicht sicher gewährleistet werden kann, dass die beiden Teile der Führungsschiene über eine lange Betriebsdauer ihre vorgesehene Position beibehalten. Bereits bei kleinen Verschiebungen der Relativposition ist jedoch ein ordnungsgemäßes und einwandfreies Abrollen der Stützrollen nicht mehr gewährleistet.

Von diesem Stand der Technik ausgehend liegt der Erfindung das Problem zu Grunde, eine Schwerlast- und Lagereinrichtung zu schaffen, welche sich durch einen einfachen, kompakten Aufbau, eine vielseitige Einsetzbarkeit und eine gleichmäßige Krafteinleitung in den Boden auszeichnet.

Dieses Problem wird erfindungsgemäß mit den Merkmalen des Anspruches 1 gelöst.

Gemäß der Erfindung ist vorgesehen, dass die Einrichtung einen Abdeckrahmen zur Aufnahme von Lasten umfasst, dass eine Führungsschiene und eine Mehrzahl von Trag- und Führungselementen, welche über Stützrollen auf der Führungsschiene abrollen, in den Abdeckrahmen integriert sind und dass Trag- und Führungselemente raupenförmig entlang der Führungsschiene bewegbar sind.

Durch die Vergrößerung der Aufstandsfläche und das dichtere Packen der Abtragslinien können mit der Erfindung hohe Lasten niveau-, konstant- und erschütterungsfrei transportiert bzw. bewegt werden. Die Erfindung trägt hierbei dem Umstand Rechnung, dass alle Untergründe je nach Material und Beschaffenheit nur bedingt Punkt- bzw. Linienlasten aufnehmen können, so dass insbesondere Rollen oder Rollengestelle, welche eben diese Linienlasten erzeugen und den Untergrund in entsprechender Weise belasten, bei Überschreitung der zulässigen Flächenlast Beschädigungen erzeugen.

Gemäß der Erfindung wird die Führungsschiene in den Abtrag- bzw. Abdeckrahmen integriert bzw. ist der Trag- bzw. Abdeckrahmen als Führung ausgebildet. Jedes Trag- und Führungselement stützt sich mit seiner Aufstandsfläche am Untergrund, bei seinem raupenförmigen Umlauf oberhalb der Führungsschiene dagegen über seine Führungsrollen auf der Führungsschiene ab. Die Ausführung der Führungsschiene ist in Form von Nuten, Leisten oder anderen Einrichtungen möglich, welche den Geradeauslauf der Einrichtung auch unter Einwirkung von Seitenkräften sicherstellen. Die Trageinheiten der Einrichtungen können Seitenkräfte aufnehmen, welche beispielsweise bei Kurvenfahrt auftreten können. Die raupenförmig angeordneten Tragelemente können an der Führungsschiene entlang bewegt werden, wodurch die Einrichtung vorwärts oder rückwärts bewegt werden kann.

Gemäß einer bevorzugten Weiterbildung sind einzelne Trag- und Führungselemente mittels geeigneter Vorrichtungen oder Verbindungsrahmen zu Sektionen verbunden. Diese Sektionen können gemäß einer ersten Weiterbildung mit Antriebswellen zur Übertragung von Antriebsleistung ausgestattet sein, welche eine synchrone Bewegung der gesamten, gekoppelten Einheit sicher stellen. Gemäß einer zweiten Weiterbildung ist vorgesehen, dass die Sektionen mit Einzelantrieben ausgestattet sind, um durch das gezielte Stoppen einzelner Antriebe bzw. durch das Realisieren unterschiedlicher Antriebsdrehzahlen eine Lenkbewegung der gekoppelten Einheiten bzw. Sektionen durchzuführen.

Die Einzelantriebe bzw. die Antriebswellen können hierbei elektrisch, pneumatisch, hydraulisch und gegebenenfalls auch mit Muskelkraft betrieben werden. Die Verbindungsrahmen zwischen einzelnen Sektionen können gegebenenfalls auch zur Lastaufnahme herangezogen werden. Die Sektionen können zu einzelnen oder mehreren separat ansteuerbaren Blöcken zusammengefasst werden, welche mittels einer elektrischen Steuerung - gegebenenfalls einer Totmannschaltung - unter zu Hilfenahme elektrischer oder pneumatischer Sensorik manuell oder automatisch verfahren oder abgesichert werden.

Durch die besondere konstruktive Ausführung der Einrichtung können die Trag- und Führungselemente mit gleich bleibendem Niveau ruckfrei und gleichförmig bewegt werden. Die Trag- und Führungselemente, welche gegebenenfalls zu Sektionen oder Blöcken zusammengeschalten sind, werden zur Bewegung und/oder Lagerung schwerer Lasten insbesondere auf ebenen, festen Untergründen, beispielsweise auf Industriefußböden oder Betonfußböden, eingesetzt.

Weitere Vorteile und zweckmäßige Ausführungen sind den weiteren Ansprüchen, der Figurenbeschreibung und den Zeichnungen zu entnehmen.

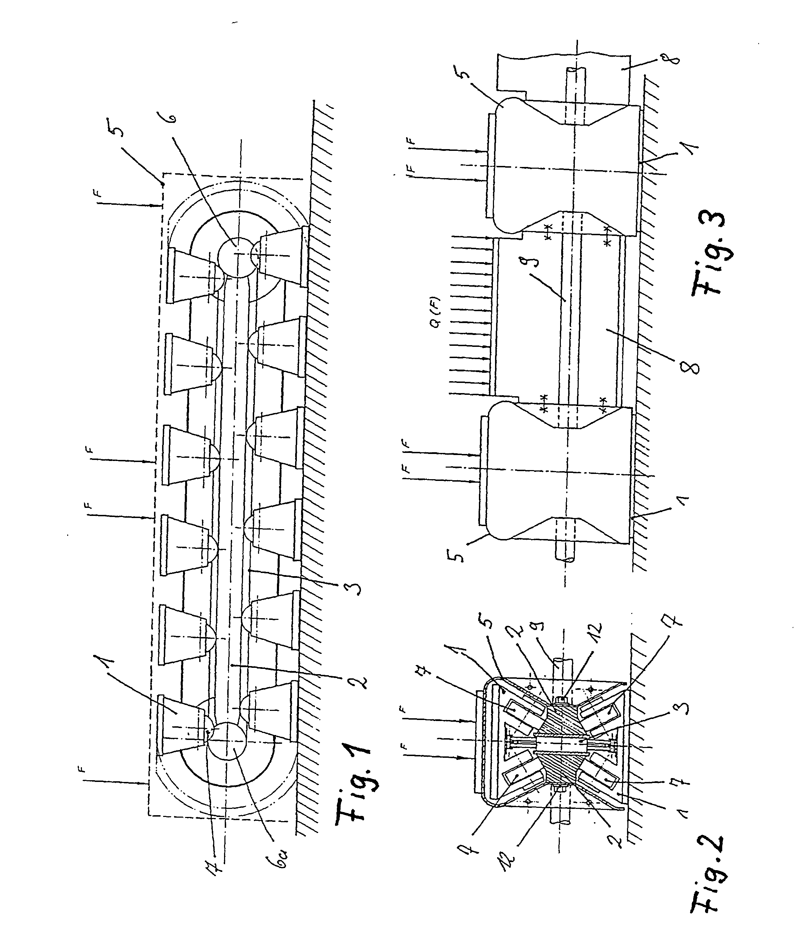

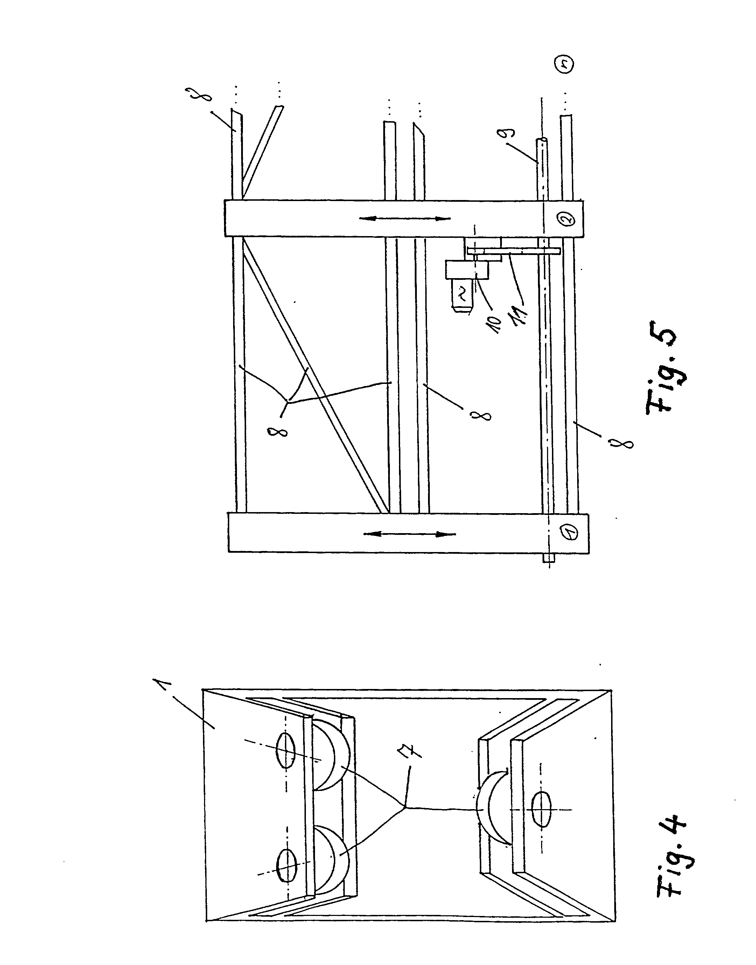

Die Transporteinrichtung besteht aus fahrbaren Trageinheiten (Fig. 1, 2, 3 und 5), die in der Regel über ihre Seiten mit einem Rahmen 8 (Fig. 3, 5) oder mehreren Rahmen zu einer Sektion oder Einheit gekoppelt und direkt oder über Zugmittel zum Beispiel in Form einer Kette oder eines Zahnrahmens 11 (Fig. 5) oder Druckmittel, zum Beispiel in Form einer Schubgliederkette, mit einer Antriebseinheit 10 (Fig. 5) verbunden und mittels dieser angetrieben werden können. Die Trageinheiten bestehen aus einem Geräterahmen 3 (Fig. 1, 2), Trag- und Führungselementen 1 (Fig. 1 bis 3), vorzugsweise angeordnet in Form einer Raupe, Trag- und Führungsschienen 2 (Fig. 1, 2), Antriebsmittel, welche bevorzugt als Zahnriemen oder Kette 4 (Fig. 1, 2) ausgebildet sind, Umlenk- und Spanneinrichtungen 6, 6a, die mit Gleit- oder Wälzlagern im Rahmen gelagert sind (Fig. 1, 2), einem Antrieb 10 (Fig. 5) und Antriebswellen 9 für eine oder beide Umlenkstationen (Fig. 2, 3 und 5). Die Krafteinleitung erfolgt über den Abdeckrahmen 5 (Fig. 1, 2 und 3), dargestellt mit Kraftpfeil F, und wird über die Befestigung bzw. besondere Vorrichtungen wie zum Beispiel Nuten oder Falze form- oder kraftschlüssig (siehe Position 12 in Fig. 2) in die Schiene 2 (Fig. 1, 2) und den Geräterahmen 3 (Fig. 2) eingeleitet. An der Schiene 2 stützen sich die Trag- und Führungselemente 1 über Stützrollen 7 (Fig. 1, 2), welche alternativ als Wälzlager, Gleitlager oder Gleitschuhe ausgebildet sind, ab und leiten den Kraftfluss über die Aufstandsfläche, welche gegebenenfalls als Verschleiß- und Ausgleichsbelag ausgebildet ist, in den Untergrund ein. Der Abdeckrahmen 5 ist so gestaltet, dass die Stützund Führungselemente 1 im Obertrum problemlos zwischen Schiene und Geräterahmen 2, 3 und der Abdeckung 5 hindurchlaufen, siehe Fig. 1 bis 3. Die Abdeckung übernimmt in dieser Ausführung sowohl tragende als auch sicherheitstechnische Schutzfunktion. Die Rahmen und Rollenanordnung 1, 2 und 7 (Fig. 2) übernimmt sowohl eine tragende als auch eine führende Funktion, wobei es allerdings nicht zwingend erforderlich ist, dass Trag- und Führungsfunktion zusammengefasst werden. Die Ausführung kann auch in eine Tragfunktion, vorzugsweise mittels einer horizontalen Anordnung von Rollen, Wälzlagern, Gleitlagern oder Gleitschuhen, und eine Führungsfunktion aufgeteilt werden, wobei letztere durch eine geeignete Anordnung von Nuten, Gleitsteinen, Rollen, Anlaufborden oder dergleichen, welche vorzugsweise in Bewegungsrichtung der Raupe gerichtet sind, realisiert wird. Die Umlenkungen sind so ausgeführt, dass die Tragelemente beim Durchlaufen der Umlenkung entweder mit Schulterkontakt, über Kulissen oder über einen oder mehrere Mitnehmer bzw. Führungseinrichtungen so in die jeweilige Endstellung gebracht werden, dass ein Verkanten ausgeschlossen ist.

Der Verbindungsrahmen 8 (Fig. 3, 4) kann sowohl als geschlossener Rahmen als auch mittels hinreichend dimensionierter Abstandshalter mit entsprechender Längs-, Quer- und Diagonalsteifigkeit ausgeführt sein. Der Verbindungsrahmen 8 hat im Allgemeinen die Aufgabe, die Tragelemente parallel zu halten, auftretende Querkräfte aufzunehmen und in das System einzuleiten. Darüber hinaus ist der Rahmen besonders geeignet, zusätzlich zu Tragelementen oder an deren Stelle Lasten aufzunehmen, vorzugsweise in Form von Ladung, beispielsweise Paletten oder sonstigen Ladungsträgern.

Jedes Tragelement stützt sich mit der der Aufstandsfläche am Untergrund gegenüberliegenden Seite über speziell angeordnete Rollen (3-Punkt-Lagerung, Fig. 4), welche als Trag- und Führungsrollen wirken, an den Trag- und Führungsschienen ab. Durch diese 3-Punkt-Anordnung wird eine Zwangsausrichtung der Tragelemente erreicht, welche einen absoluten Lauf in der Vorgaberichtung ermöglicht.

Diese Einrichtungen sind neben dem normalen Transport von schweren Lasten auf ebenen befestigten Gründen in Kombination mit Lagereinrichtungen oder sonstigen Aufbauten hervorragend für den Einsatz als schienenlose Schwerlast-Verschieberegale geeignet.

## Patentansprüche

1. Schwerlasttransport- und Lagereinrichtung mit verfahrbaren Trageinheiten zum Transport und zur Lagerung schwerer Lasten wie Maschinen oder schwere Güter, wobei die Einrichtung einen Abdeckrahmen (5) zur Aufnahme der Lasten umfasst, eine Führungsschiene (2) und eine Mehrzahl von Trag- und Führungselementen (1), welche über Stützrollen (7) auf der Führungsschiene (2) abrollen, in den Abdeckrahmen (5) integriert sind und die Trag- und Führungselemente (1) raupenförmig entlang der Führungsschiene (2) bewegbar sind,
**dadurch gekennzeichnet,**
**dass** die Stützrollen (7) gegenüber einer vertikalen Mittelebene durch die Führungsschiene (2) einen Winkel einschließen.

2. Einrichtung nach Anspruch 1,
**dadurch gekennzeichnet,**
**dass** einzelne der Trag- und Führungselemente (1) mittels geeigneter Vorrichtungen oder Verbindungsrahmen (8) zu Sektionen verbunden werden können.

3. Einrichtung nach Anspruch 2,
**dadurch gekennzeichnet,**
**dass** die Sektionen mit Antriebswellen zur Übertragung der Antriebsleistung ausgestattet sind.

4. Einrichtung nach Anspruch 2,
**dadurch gekennzeichnet,**
**dass** die Sektionen mit Einzelantrieben ausgestattet sind.

5. Einrichtung nach einem der Ansprüche 1 bis 4,
**dadurch gekennzeichnet,**
**dass** die Trag- und Führungselemente (1) zur Verschleißminderung und zum Ausgleich kleiner Untergrundebenheiten an ihren Aufstandsflächen beschichtet sind, insbesondere mit Polyurethanschaum.

## Claims

1. Heavy load transport and storage device with movable loadbearing units for the transport and for the storage of heavy loads such as machines or heavy goods, the device comprising a covering frame (5) to hold the loads, a guide rail (2) and a plurality of loadbearing and guide elements (1), which roll on the guide rail (2) via supporting rollers (7), are integrated into the covering frame (5), and the loadbearing and guide elements (1) being capable of being moved along the guide rail (2) in the manner of a caterpillar,
**characterized in that** the supporting rollers (7) form an angle with respect to a vertical mid-plane through the guide rail (2).

2. Device according to Claim 1, **characterized in that** individual loadbearing and guide elements (1) can be combined to form sections by means of suitable devices or connecting frames (8).

3. Device according to Claim 2, **characterized in that** the sections are equipped with drive shafts for transmitting the drive power.

4. Device according to Claim 2, **characterized in that** the sections are equipped with individual drives.

5. Device according to one of Claims 1 to 4, **characterized in that** the loadbearing and guide elements (1) are coated, in particular with polyurethane foam, on their standing surfaces, in order to reduce wear and to compensate for small irregularities in the base.

## Revendications

1. Dispositif d'entreposage et de transport de charges lourdes, doté d'unités de support déplaçable, pour le transport et l'entreposage de charges lourdes, par exemple des machines ou des marchandises lourdes, le dispositif comprenant un cadre de recouvrement (5) pour la reprise des charges, un rail de guidage (2) et une pluralité d'éléments de support et de guidage (1) qui roulent par des galets de soutien (7) sur le rail de guidage (2) et qui sont intégrés dans le cadre de recouvrement (5), les éléments de support et de guidage (1) pouvant être déplacés en chenille le long du rail de guidage (2),
**caractérisé en ce que** les galets de soutien (7) forment un angle par rapport à un plan central vertical passant par le rail de guidage (2).

2. Dispositif selon la revendication 1, **caractérisé en ce que** certains des éléments de support et de guidage (1) peuvent être reliés en sections au moyen de dispositifs ou de bâtis de liaison (8) appropriés.

3. Dispositif selon la revendication 2, **caractérisé en ce que** les sections sont équipées d'arbres d'entraînements pour le transfert de la puissance d'entraînement.

4. Dispositif selon la revendication 2, **caractérisé en ce que** les sections sont équipées d'entraînements individuels.

5. Dispositif selon l'une des revendications 1 à 4, **caractérisé en ce que** les éléments de support et de guidage (1) sont revêtus sur leur surface d'appui, en particulier de mousse de polyuréthane, pour diminuer l'usure et compenser de petites irrégularités du sol sous-jacent.
